# EUROPEAN PATENT APPLICATION

(11) **EP 2 413 652 A1**
(43) Date of publication of application: **01.02.2012**
(21) Application number: 10756079.9
(22) Date of filing: 24.03.2010
(51) Int. Cl.: H04W 72/04, H04J 1/00, H04J 3/00, H04W 72/12

(54) **RADIO BASE STATION AND MOBILE COMMUNICATION METHOD**

(30) Priority: 25.03.2009 JP 2009075215
(71) Applicant: NTT DOCOMO, INC., Chiyoda-ku Tokyo 100-6150 (JP)
(72) Inventor: KIYOSHIMA, Kohei, Tokyo 100-6150 (JP); OKUBO, Naoto, Tokyo 100-6150 (JP); ISHII, Hiroyuki, Tokyo 100-6150 (JP)
(74) Representative: HOFFMANN EITLE
(86) International application number: PCT/JP2010/055018
(87) International publication number: WO 2010/110283

(57) **Abstract**

A radio base station according to the present invention comprising: a resource assignment unit configured to determine a time direction resource, a frequency direction resource, and a code direction resource which are to be assigned as a reception quality notification resource that should be used for notifying each mobile station of a reception quality in a downlink, the resource assignment unit is configured to determine the time direction resources and the frequency direction resources, which are to be assigned as the reception quality notification resource, and then determine the code direction resources to be assigned as the reception quality notification resource.

## Description

### TECHNICAL FIELD

The present invention relates to a radio base station and a mobile communication method.

### BACKGROUND ART

In a mobile communication system of an LTE (Long Term Evolution) scheme defined in the 3GPP, each mobile station UE is configured to transmit CQI (Channel Quality Indicator) to a radio base station eNB via PUCCH (Physical Uplink Control Channel). In this system, the CQI corresponds to a reception quality in a downlink and is transmitted within a cell subordinate to the radio base station eNB.

### SUMMARY OF THE INVENTION

### PROBLEMS TO BE SOLVED BY THE INVENTION

However, since a method of assigning a CQI transmission resource to each mobile station UE is not defined in 3GPP, there is a problem that the CQI transmission resource is not appropriately assigned in the above-mentioned mobile communication system.

Therefore, the present invention is intended to overcome the above-described problem. An object of the present invention is to provide a radio base station capable of appropriately assigning a CQI transmission resource, and a mobile communication method therefor.

### MEANS FOR SOLVING THE PROBLEM

The first feature of the present invention is summarized in that a radio base station comprising: a resource assignment unit configured to determine a time direction resource, a frequency direction resource, and a code direction resource which are to be assigned as a reception quality notification resource that should be used for notifying each mobile station of a reception quality in a downlink, the resource assignment unit is configured to determine a resources block, which are to be assigned as the reception quality notification resources, and then determine the code direction resources to be assigned as the reception quality notification resource, the resources block configured to be predetermined direction resource and predetermined frequency direction resource.

The second feature of the present invention is summarized in that a mobile communication method, comprising: a step A of determining a time direction resource, a frequency direction resource, and a code direction resource which are to be assigned as a reception quality notification resource that should be used for notifying each mobile station of a reception quality in a downlink; and a step B of notifying each mobile station of the time direction resource, the frequency direction resource, and the code direction resources which are assigned as the reception quality notification resource, in the step A, a resources block to be assigned as the reception quality notification resource are determined, and then the code direction resource to be assigned as the reception quality notification resource is determined, the resources block configured to be predetermined direction resource and predetermined frequency direction resource.

### EFFECT OF THE INVENTION

As described above, according to the present invention, it is possible to provide a radio base station capable of appropriately assigning a CQI transmission resource, and a mobile communication method therefor.

### BRIEF DESCRIPTION OF THE DRAWING

[Fig. 1] Fig. 1 is a diagram showing the entire configuration of a mobile communication system according to a first embodiment of the present invention.
[Fig. 2] Fig. 2 is a functional block diagram of a radio base station according to the first embodiment of the present invention.
[Fig. 3] Fig. 3 is a diagram explaining a method of designating a sub-frame by which CQI assigned by the radio base station according to the first embodiment of the present invention is transmitted.
[Fig. 4] Fig. 4 is a diagram explaining a method in which the radio base station according to the first embodiment of the present invention assigns a PUCCH resource.
[Fig. 5] Fig. 5 is a diagram explaining a resource block within a PUCCH resource assigned by the radio base station according to the first embodiment of the present invention.
[Fig. 6] Fig. 6 is a diagram explaining a method in which a resource block within a PUCCH resource is assigned by the radio base station according to the first embodiment of the present invention in order to transmit CQI, ACK/NACK, and Scheduing Request.
[Fig. 7] Fig. 7 is a diagram explaining a resource block assigned for exclusively transmitting CQI, from among resource blocks within a PUCCH resource, by the radio base station according to the first embodiment of the present invention.
[Fig. 8] Fig. 8 is a diagram explaining a resource block assigned for transmitting CQI, ACK/NACK, and Scheduing Request in a mixed manner, from among resource blocks within a PUCCH resource, by the radio base station according to the first embodiment of the present invention.
[Fig. 9] Fig. 9 is a diagram explaining an index imparted to the resource block within a PUCCH resource assigned by the radio base station according to the first embodiment of the present invention.
[Fig. 10] Fig. 10 is a diagram explaining a method in which a resource block within a PUCCH resource is assigned by the radio base station according to the first embodiment of the present invention in order to transmit CQI.
[Fig.11] Fig. 11 is a diagram explaining a trouble occurring at both ends of a system bandwidth of the mobile communication system according to the first embodiment of the present invention.
[Fig. 12] Fig. 12 is a diagram explaining a method in which a resource block within a PUCCH resource is assigned by the radio base station according to the first embodiment of the present invention in order to transmit CQI.
[Fig. 13] Fig. 13 is a diagram explaining a method in which a resource block within a PUCCH resource is assigned by the radio base station according to the first embodiment of the present invention in order to transmit CQI.
[Fig. 14] Fig. 14 is a diagram explaining a method in which a code direction resource within a PUCCH resource is assigned by the radio base station according to the first embodiment of the present invention in order to transmit CQI.
[Fig. 15] Fig. 15 is a diagram explaining a method in which a resource block within a PUCCH resource is assigned by the radio base station according to the first embodiment of the present invention in order to transmit CQI.
[Fig. 16] Fig. 16 is a flowchart illustrating a method of assigning a resource to transmit CQI by the radio base station according to the first embodiment of the present invention.
[Fig. 17] Fig. 17 is a flowchart illustrating a method of assigning a resource to transmit CQI by the radio base station according to the first embodiment of the present invention.
[Fig. 18] Fig. 18 is a flowchart illustrating a method of assigning a resource to transmit CQI by the radio base station according to the first embodiment of the present invention.
[Fig. 19] Fig. 19 is a flowchart illustrating a method of assigning a resource to transmit CQI by the radio base station according to the first embodiment of the present invention.

### BEST MODES FOR CARRYING OUT THE INVENTION

### (Configuration of mobile communication system according to first embodiment of the present invention)

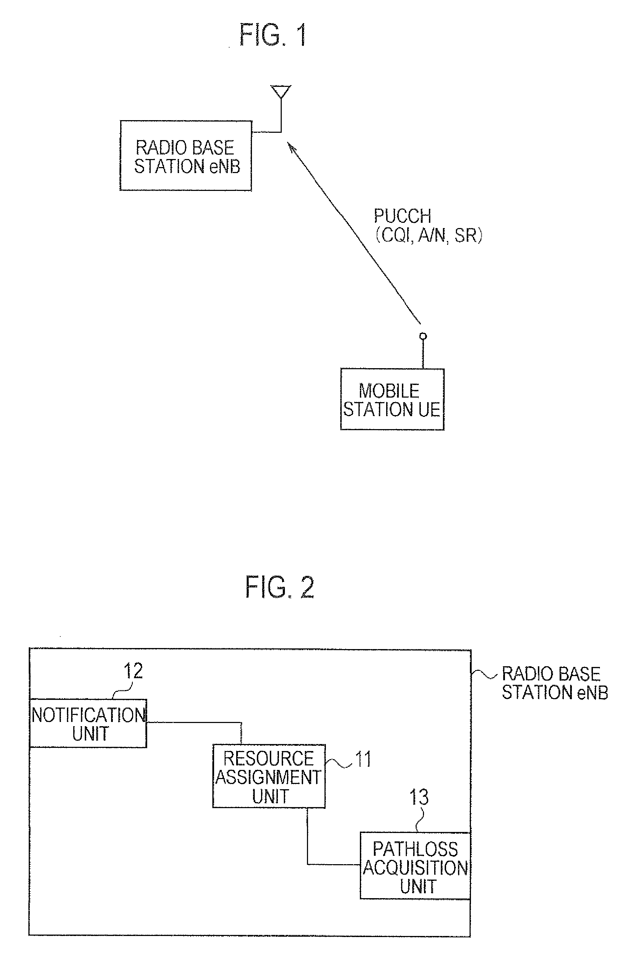

With reference to Fig. 1 to Fig. 15, the configuration of a mobile communication system according to a first embodiment of the present invention will be explained.

The mobile communication system according to the present embodiment is a mobile communication system of an LTE scheme. In the mobile communication system according to the present embodiment, as illustrated in Fig. 1, a mobile station UE is configured to transmit CQI, ACK/NACK (hereinafter, referred to as "A/N") for downlink data, Scheduling Request (hereinafter, referred to as "SR") for requesting scheduling for uplink data transmission, and the like to a radio base station eNB via PUCCH.

As illustrated in Fig. 2, the radio base station eNB includes a resource assignment unit 11, a notification unit 12, and a pathloss acquisition unit 13.

The resource assignment unit 11 is configured to assign a predetermined physical channel resource in each cell subordinate to the radio base station eNB.

For example, the resource assignment unit 11 is configured to assign a PUCCH resource, a PUSCH (Physical Uplink Shared Channel) resource and the like as an uplink physical channel resource in each cell subordinate to the radio base station eNB.

Further, the resource assignment unit 11 is configured to assign a PDCCH (Physical Downlink Control Channel) resource, a PDSCH (Physical Downlink Shared Channel) resource and the like as a downlink physical channel resource in each cell subordinate to the radio base station eNB.

Here, the resource assignment unit 11 is configured to assign a CQI transmission resource (reception quality notification resource that should be used for notifying a reception quality in a downlink), an A/N transmission resource, or an SR transmission resource, from among the PUCCH resources.

It is noted that the mobile station UE is configured to measure a reception quality (e.g., SIR) in the downlink using a downlink reference signal (RS), and calculate CQI corresponding to the measured reception quality.

The CQI includes a "Wideband CQI" (hereinafter, referred to as "WB CQI"), which is measured over a system bandwidth, and a "Subband CQI" measured in each subband obtained by dividing the system bandwidth into a plurality of frequency bands (Subbands).

A specific example of the operation in which the resource assignment unit 11 assigns the resource will be explained later.

The notification unit 12 is configured to notify the resource assigned by the resource assignment unit 11 in each cell subordinate to the radio base station eNB.

Specifically, the notification unit 12 is configured to notify each mobile station UE of the CQI transmission resource, the A/N transmission resource, or the SR transmission resource by way of an RRC message.

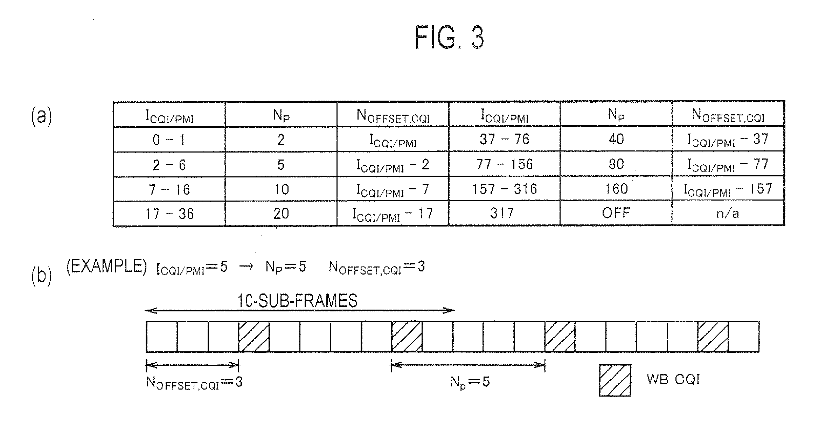

For example, since a "WB CQI" transmission resource (i.e., sub-frame) is specified by a report cycle Nₚ and offset N_{OFFSET,CQI,} the notification unit 12 may be configured to transmit "I_{CQI/PMI} (cqi-pmi-ConfigIndex)" illustrated in Fig. 3a to notify the "WB CQI" transmission resource (i.e., sub-frame) assigned by the resource assignment unit 11.

Here, when "I_{CQI/PWI}"= "5" is received, the mobile station UE is configured to determine that the "Nₚ" = "5" and the "N_{OFFSET},_{CQI}"= "3" with reference to a table illustrated in Fig. 3a and transmit the "WB CQI" by sub-frames hatched by inclined lines in Fig. 3b.

The pathloss acquisition unit 13 is configured to acquire propagation loss (pathloss) in an uplink.

For example, the pathloss acquisition unit 13 may be configured to calculate the propagation loss (pathloss) in the uplink based on "Power Headroom" notified from the mobile station UE. Here, the "Power Headroom" denotes information indicating how much transmission power is left in the mobile station UE.

The specific example of the operation in which the resource assignment unit 11 assigns the resource will be explained, below.

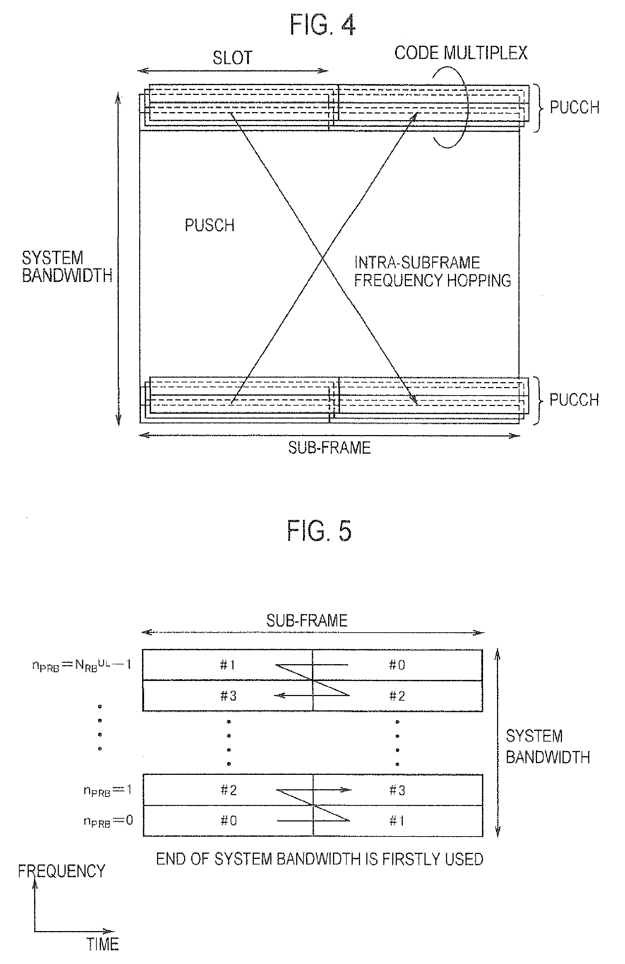

As illustrated in Fig. 4 and Fig. 5, the resource assignment unit 11 is configured to assign, as a PUCCH resource block, in order from resource blocks at the both ends of a system bandwidth, and then to assign a resource block inside the resource block assigned as the PUCCH resource blocks as a PUSCH resource block.

As illustrated in Fig. 4, it is configured such that a code multiplex is performed in each PUCCH resource block. Thus, the resource assignment unit 11 is configured to assign a time direction resource, a frequency direction resource, and a code direction resource as the PUCCH resource.

Here, the time direction resource is a sub-frame, and the frequency direction resource is a resource block configured by 7 OFDM symbols and 12 sub-carriers. Further, the code direction resource is configured by a plurality of cyclic sequences (hereinafter, referred to as "CSs") which are in a "Cyclic Shift" relationship and are orthogonal to one another.

Further, the resource assignment unit 11 is configured to assign the PUCCH resource using "Intra-subframe frequency hopping" as illustrated in Fig. 4 between a first half portion (slot) and a second half portion (slot) within a single sub-frame.

As illustrated in Fig. 5, a resource block number is imparted, in order from the both ends of the system bandwidth, to a resource block that can be used as the PUCCH resource block. Here, "N_{RB}^{uL}" denotes the number of resource blocks assignable as uplink channel (e.g., PUCCH and PUSCH) resource blocks.

As illustrated in Fig. 5, the resource assignment unit 11 is configured to assign two resource blocks with which the same resource block number is imparted as the same PUCCH resource blocks.

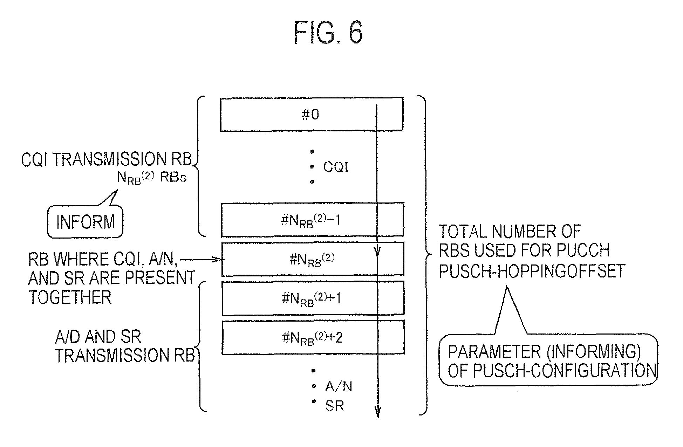

As illustrated in Fig. 6, from among the resource blocks assigned as the PUCCH resource blocks, the resource assignment unit 11 is configured to assign, as the CQI transmission resource block, in order from a resource block with which a lower resource block number is imparted, and then to assign the remaining resource blocks as the A/N transmission resource block and the SR transmission resource block.

Here, "pusch-HoppingOffset" denotes the number of resource blocks assignable as the PUCCH resource block, and "N_{RB}⁽²⁾" denotes the number of resource blocks assignable as the CQI transmission resource block.

It is noted that as illustrated in Fig. 6, the PUCCH resource block may include a "resource block where CQI, A/N, and SR are present together", which is the CQI transmission resource block, the A/N transmission resource block, and the SR transmission resource block.

The notification unit 12 may be configured to inform the "pusch-HoppingOffset" and the "N_{RB}⁽²⁾" as common values in each cell subordinate to the radio base station eNB.

Here, the resource assignment unit 11 is configured to determine the frequency direction resource (resource block) and the code direction resource (CSs), which are to be assigned to each mobile station UE as the CQI transmission resource, from among the resource blocks assigned as the PUCCH resource blocks.

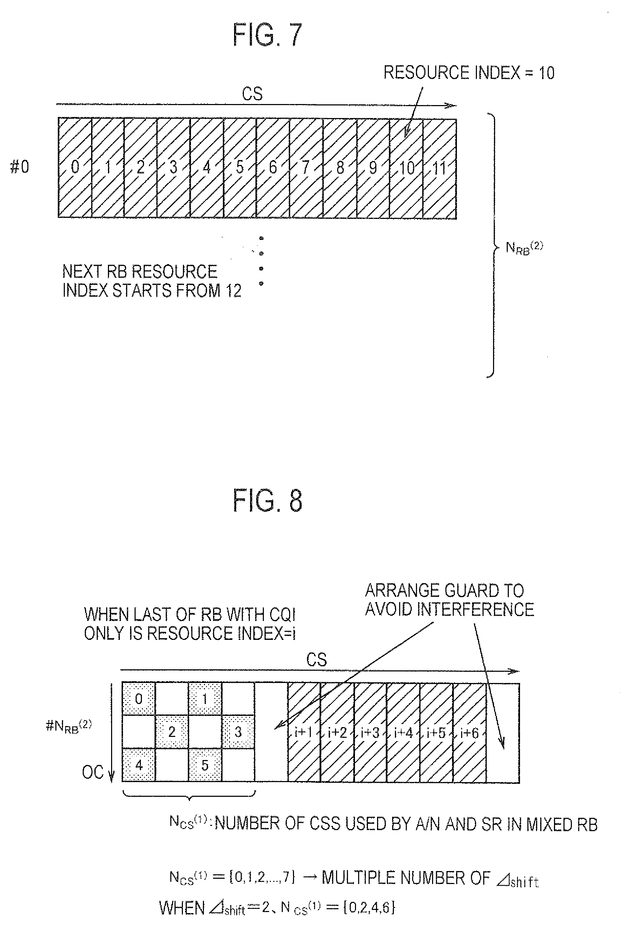

As illustrated in Fig. 7, a resource index is imparted to the code direction resource (CSs) assignable as the CQI transmission resource within the single sub-frame. The resource index is configured to be continuously imparted over a plurality of resource blocks within a single sub-frame.

The notification unit 12 is configured to notify each mobile station UE of the resource index, and each mobile station UE is configured to transmit CQI using the CQI transmission resource (the PUCCH) specified by the notified resource index.

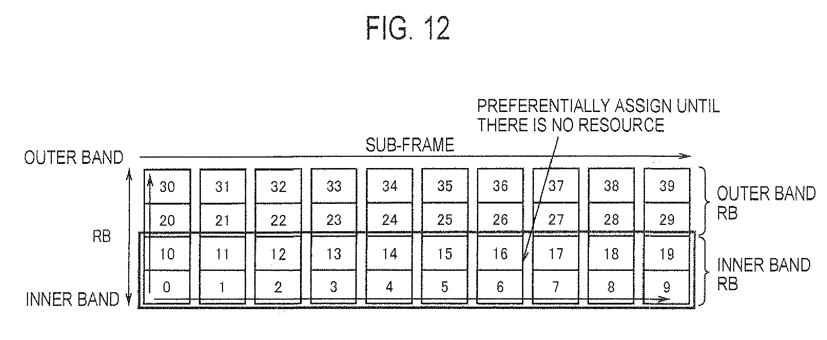

As illustrated in Fig. 7, 12 code direction resources (CSs) can be multiplexed within one frequency direction resource (resource block). In the example of Fig. 7, in a resource block #1, a resource index imparted to the CQI transmission resource starts from "12".

Further, in a resource block #N_{RB}⁽²⁾ where CQI, A/N, and SR are present together, as illustrated in Fig. 8, there are a code direction resource (CSs) assignable as the CQI transmission resource, and a code direction resource (CSs) assignable as the A/N transmission resource and the SR transmission resource.

Here, "N_{CS}⁽¹⁾" denotes the number of code direction resources (CSs) assignable as the A/N transmission resource and the SR transmission resource in the resource block where CQI, A/N and SR are present together, and is a multiple of Δ_{shift}.

The resource index imparted to the CQI transmission resource and the resource index imparted to the A/N transmission resource and the SR transmission resource are different from each other.

In the example of Fig. 8, as the A/N transmission resource and the SR transmission resource, four code direction resources (CSs) can be multiplexed within one frequency direction resource (resource block), and three orthogonal codes (OCs) can be multiplexed within one code direction resource (CSs).

It is noted that, in order to avoid interference, a guard code direction resource (CSs) is provided between the code direction resource (CSs) assignable as the CQI transmission resource and the code direction resource (CSs) assignable as the A/N transmission resource and the SR transmission resource. Further, the guard code direction resource (CSs) may be provided between the code direction resources (CSs) assignable as the CQI transmission resource.

In this way, the resource assignment unit 11 determines the time direction resource (sub-frame) and the frequency direction resource (resource block) to be assigned as the CQI transmission resource and then finally determines the code direction resource (CSs) to be assigned as the CQI transmission resource, thereby reducing the assignment of the CQI transmission resource within the same frequency direction resource (resource block) and suppressing an increase of interference as much as possible.

Specifically, the resource assignment unit 11 may be configured to determine the frequency direction resource (resource block) to be assigned as the CQI transmission resource, based on the usage situation of the code direction resource (CSs) in each frequency direction resource (resource block).

For example, the resource assignment unit 11 may be configured to assign, as the CQI transmission resource, in order from a frequency direction resource (resource block) with a smaller number of code direction resources (CSs) in use within each time direction resource (sub-frame).

For example, the resource assignment unit 11 may be configured to assign, as the CQI transmission resource, in order from a frequency direction resource (resource block) with a larger number of code direction resources (CSs) available within each time direction resource (sub-frame).

For example, the resource assignment unit 11 may be configured to assign, as the CQI transmission resource, in order from a frequency direction resource (resource block) with a smaller usage rate of the code direction resource (CSs) within each time direction resource (sub-frame).

In this case, the usage rate of the code direction resource (CSs) is a ratio of the number of code direction resources (CSs) in use, relative to the number of code direction resources (CSs) for CQI transmission in each frequency direction resource (resource block).

In this case, the resource assignment unit 11 may be configured to monitor a period elapsed from a release of the code direction resource (CSs) within each frequency direction resource (resource block) with the timer, and to use the code direction resource (CSs) that has elapsed a constant period after the release in each frequency direction resource (resource block) as the usable code direction resource (CSs).

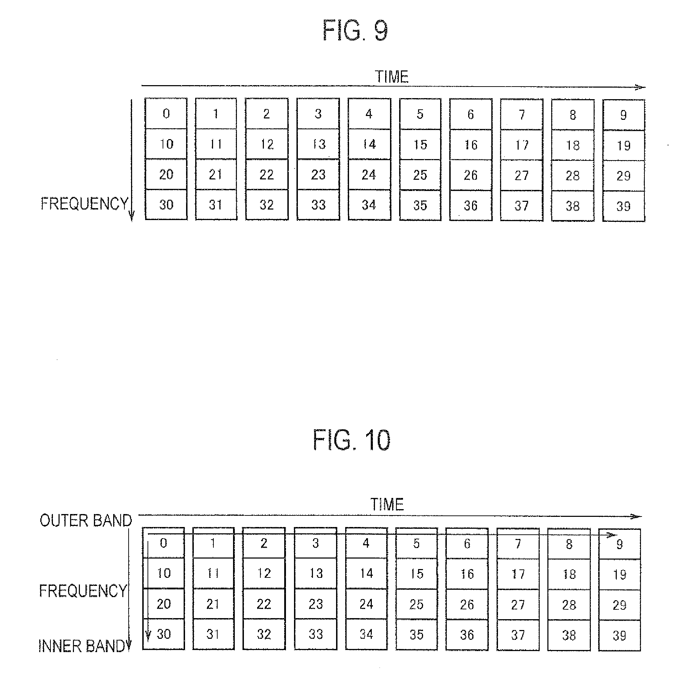

For example, the resource assignment unit 11 is configured to assign the index to the frequency direction resource (resource block) assignable as the CQI transmission resource, in order of the time direction and the frequency direction, as illustrated in Fig. 9.

Then, the resource assignment unit 11 is configured to assign as the CQI transmission resource in order from a frequency direction resource (resource block) having a smaller number of the code direction resources (CSs) in use (or a larger number of the usable code direction resources (CSs), or a smaller usage rate of the code direction resource (CSs)) within each time direction resource (sub-frame). However, the resource assignment unit 11 is configured to assign, as the CQI transmission resource, a frequency direction resource (resource block) having the smallest index, if the number of code direction resources (CSs) in use (or the number of usable code direction resources, or the usage rate of the code direction resource (CSs)) is the same in a plurality of frequency direction resources (resource blocks).

Further, as illustrated in Fig. 10, the resource assignment unit 11 may be configured to assign, as the CQI transmission resource, in order from a frequency direction resource (resource block) belonging to an inner frequency band within the system bandwidth.

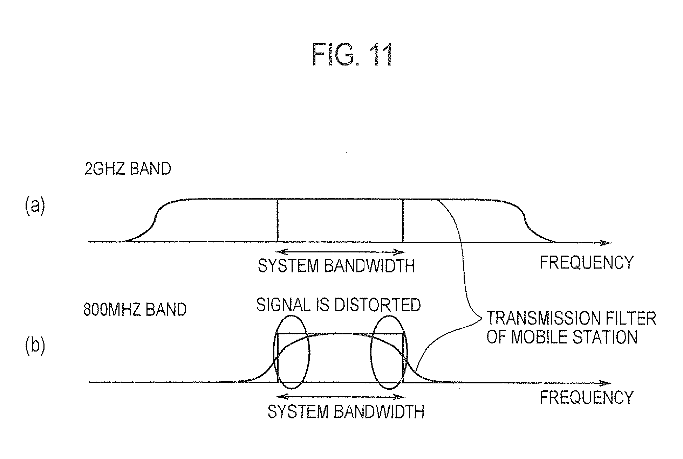

Here, when considering a characteristic of a transmission filter in the mobile station UE, it is probable that in a certain frequency band, signals at both ends of a frequency band may be distorted and the reception quality may deteriorate (see Fig. 11b).

For example, as illustrated in Fig. 11a, in a certain propagation loss in the uplink, when the frequency band of a system is 2 GHz band, no problem occurs. However, as illustrated in Fig. 11a, when the frequency band of the system is 800 MHz band, it is probable that transmission signal from the mobile station UE is distorted due to the influence of the transmission filter of the mobile station UE, and a sufficient quality cannot be obtained at the radio base station eNB.

Therefore, as illustrated in Fig. 12, the resource assignment unit 11 may be configured to classify frequency direction resources (resource blocks) into inner band resource blocks (resource blocks #0 to #19) belonging to an inner frequency band in the system bandwidth and outer band resource blocks (resource blocks #20 to #39) belonging to an outer frequency band in the system bandwidth, and assign, as the CQI transmission resource, one of the inner band resource blocks and the outer band resource blocks.

That is, the resource assignment unit 11 may be configured to preferentially assign the code direction resources within the inner band resource blocks as the CQI transmission resources until the code direction resources (CSs) assignable as the CQI transmission resources do not exist within the inner band resource blocks, and then assign the code direction resources within the outer band resource blocks.

In such a case, as illustrated in Fig. 12, the resource assignment unit 11 is configured to assign the above-mentioned index, in order from the frequency direction resources (resource blocks) including sub-carries belonging to the inner frequency band.

With such a configuration, since the inner band resource blocks are preferentially used, it is possible to improve the characteristic deterioration due to signal distortion in both end bands of the transmission filter of the mobile station UE.

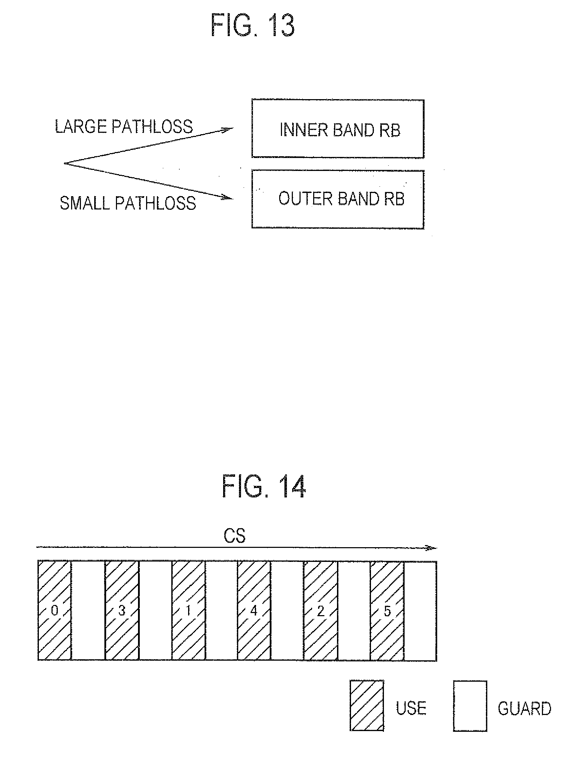

Further, as illustrated in Fig. 13, the resource assignment unit 11 may be configured to assign, as the CQI transmission resources, one of the inner band resource blocks and the outer band resource blocks, based on the propagation loss in the uplink.

Specifically, when the propagation loss in the uplink is larger than a predetermined value, the resource assignment unit 11 may be configured to assign the inner band resource blocks as the CQI transmission resources. When the propagation loss in the uplink is smaller than the predetermined value, the resource assignment unit 11 may be configured to assign the outer band resource blocks as the CQI transmission resources.

Further, the resource assignment unit 11 may be configured to adjust "N_{RB}^{GUARD}", which denotes the number of outer band resource blocks that can be multiplexed in the frequency direction, according to a frequency band used in the transmission filter of the mobile station UE.

For example, when the frequency band used in the transmission filter of the mobile station UE is a band (e.g., a 2 GHz band) where no signal distortion occurs in both side bands thereof, the resource assignment unit 11 may set the number of outer band resource blocks to "0".

Further, the resource assignment unit 11 may be configured to intermittently assign the code direction resources (CSs) in each frequency direction resource (resource block).

For example, as illustrated in Fig. 14, the resource assignment unit 11 is configured to perform the assignment in a thinning-out manner in which the code direction resources (CSs) assigned as the CQI transmission resource are spaced as far apart as possible, in each frequency direction resource (resource block).

Specifically, as illustrated in Fig. 14, the resource assignment unit 11 is configured to assign the code direction resource (CSs) assigned as the CQI transmission resource in a round-robin manner in order from CS#1 to CS#2 to CS#3 to CS#4 to CS#5, i.e., in order of the indexes imparted to the code direction resource (CSs).

It is noted that, as illustrated in Fig. 14, the resource assignment unit 11 may be configured to provide the above-mentioned guard code direction resources (CSs) among the code direction resources (CSs).

Further, the resource assignment unit 11 may be configured to deviate the assignment position of the code direction resource (CSs) with which a specific index is imparted from an assignment position of the code direction resource (CSs) with which the specific index is imparted in another cell.

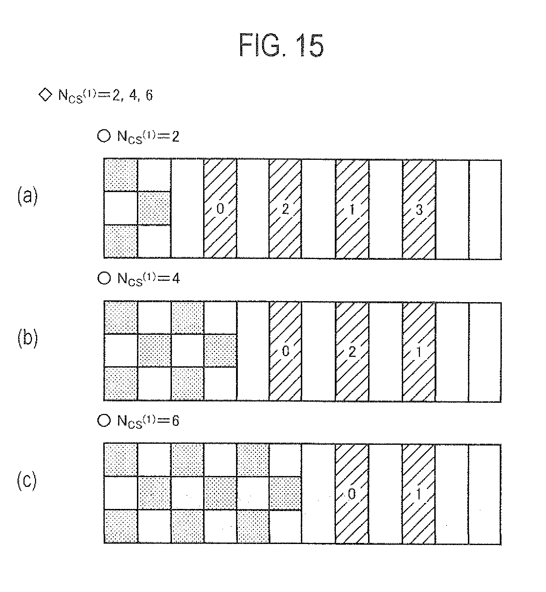

Fig. 15 illustrates an example of a method for assigning code direction resources (CSs) in resource blocks where the CQI, the A/N and the SR are present together. Here, "N_{CS}⁽¹⁾" denotes the number of code direction resources (CSs) assignable as the A/N transmission resources and the SR transmission resources in one frequency direction resource (resource block where the CQI, the A/N and the SR are present together).

### (Operation of mobile communication system according to first embodiment of the present invention)

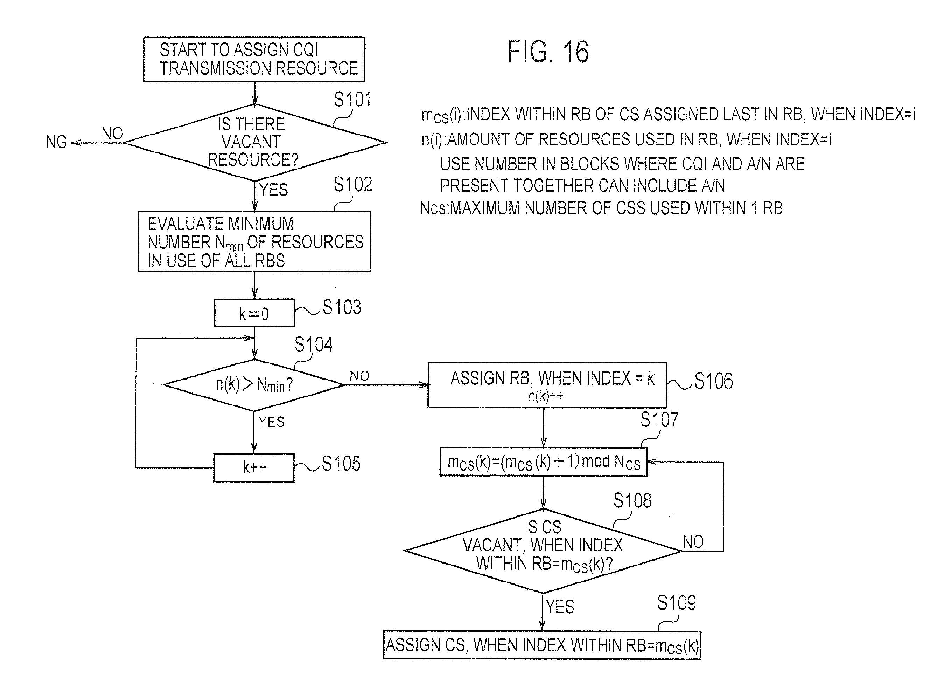

With reference to Fig. 16 to Fig. 19, the operation of the mobile communication system according to this embodiment, specifically, an operation in which the radio base station eNB assigns the CQI transmission resource according to this embodiment will be explained.

Firstly, with reference to Fig. 16, a first example of the assignment operation will be explained. As illustrated in Fig. 16, in step S101, the radio base station eNB determines whether a vacant resource assignable as the CQI transmission resource exists in PUCCH resources.

When it is determined that the vacant resource exists, the radio base station eNB proceeds to the process of step S102, When it is determined that the vacant resource does not exist, the radio base station eNB fails in the assignment of the CQI transmission resource.

In step S102, the radio base station eNB evaluates a minimum value Nₘᵢₙ of the code direction resource (CSs) in use within the frequency direction resource (resource block) including the vacant resource assignable as the CQI transmission resource.

The radio base station eNB sets "k=0" in step S103 and determines whether "n(k)>Nₘᵢₙ" is established in step S104. Here, the "n(k)" denotes the amount of resources used in resource block #k.

When it is determined that the "n(k)>Nₘᵢₙ" is established, the radio base station eNB increments "k" by 1 in step S105 and returns to the operation of step S104.

Meanwhile, when it is determined that the "n(k)>Nₘᵢₙ" is not established, the radio base station eNB assigns the resource block #k as the CQI transmission resource and increments "n(k)" by one in step S106, and updates "m_{CS}(k)" by 'm_{CS}(k)=(m_{CS}(k)+1) mod N_{CS}" in step S107.

Here, the "mcs(k)" denotes the index in the resource block of the code direction resource (CSs) assigned in the previous time in the resource block #k, and the "N_{CS}" denotes a maximum number of available code direction resources (CSs) in one frequency direction resource (resource block).

In step S108, the radio base station eNB determines whether the code direction resource (CSs) with the index "mcs(k)" in the resource block is vacant.

When it is determined that the code direction resource (CSs) is not vacant, the radio base station eNB repeats the operation of step S108. When it is determined that the code direction resource (CSs) is vacant, the radio base station eNB assigns the code direction resource (CSs) as the CQI transmission resource in step S109.

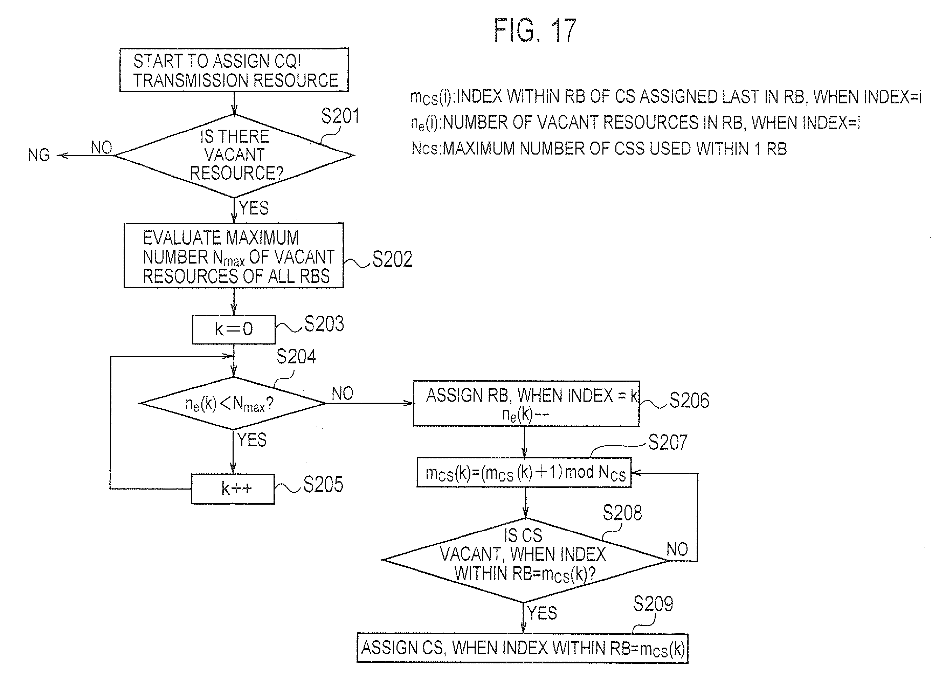

Secondly, with reference to Fig. 17, a second example of the assignment operation will be explained. As illustrated in Fig. 17, in step S201, the radio base station eNB determines whether a vacant resource assignable as the CQI transmission resource exists within the PUCCH resource.

When it is determined that the vacant resource exists, the radio base station eNB proceeds to the process of step S202. When it is determined that the vacant resource does not exist, the radio base station eNB fails in the assignment of the CQI transmission resource.

In step S202, the radio base station eNB evaluates a maximum value Nₘₐₓ of the code direction resource (CSs) available within the frequency direction resource (resource block) including the vacant resource assignable as the CQI transmission resource.

The radio base station eNB sets "k=0" in step S203 and determines whether "nₑ(k)<Nₘₐₓ" is established in step S204. Here, the "nₑ(k)" denotes an amount of resources used in the resource block #k.

When it is determined that the "nₑ(k)<Nₘₐₓ" is established, the radio base station eNB. increments "k" by one in step S205 and returns to the operation of step S104.

Meanwhile, when it is determined that the "nₑ(k)<Nₘₐₓ" is not established, the radio base station eNB assigns the resource block #k as the CQI transmission resource and increments "nₑ(k)" by one in step S206, and updates "m_{CS}(k)" by "m_{CS}(k) = (m_{CS}(k)+1) mod N_{CS}" in step S207.

Here, the "m_{CS}(k)" denotes the index in the resource block of the code direction resource (CSs) assigned in the previous time in the resource block #k, and the "Ncs" denotes a maximum number of available code direction resources (CSs) in one frequency direction resource (resource block).

In step S208, the radio base station eNB determines whether the code direction resource (CSs) with the index "mcs(k)" in the resource block is vacant.

When it is determined that the code direction resource (CSs) is not vacant, the radio base station eNB repeats the operation of step S208. When it is determined that the code direction resource (CSs) is vacant, the radio base station eNB assigns the code direction resource (CSs) as the CQI transmission resource in step S209.

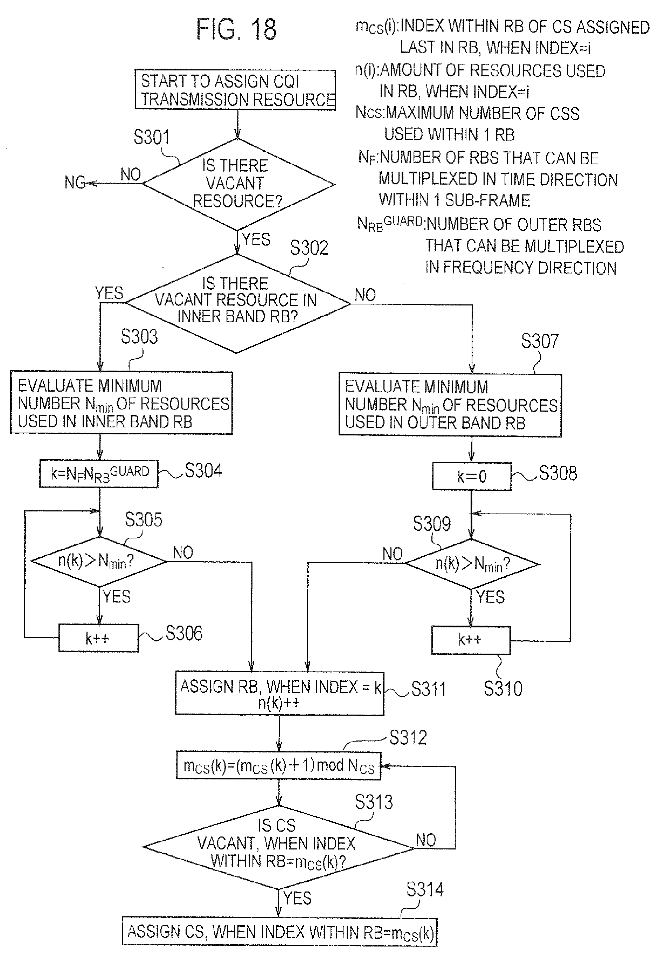

Thirdly, with reference to Fig. 18, a third example of the assignment operation will be explained. As illustrated in Fig. 18, in step S301, the radio base station eNB determines whether a vacant resource assignable as the CQI transmission resource exists within the PUCCH resource.

When it is determined that the vacant resource exists, the radio base station eNB proceeds to the process of step S302. When it is determined that the vacant resource does not exist, the radio base station eNB fails in the assignment of the CQI transmission resource.

In step S302, the radio base station eNB determines whether an available code direction resource (CSs) exists within the inner band resource block.

When it is determined that the available code direction resource (CSs) exists, the radio base station eNB proceeds to the process of step S303. When it is determined that the available code direction resource (CSs) does not exist, the radio base station eNB proceeds to the process of step S397.

In step S303, the radio base station eNB evaluates a minimum value Nₘᵢₙ of the code direction resources (CSs) in use within the inner band resource block.

The radio base station eNB sets "k=N_{F}·N _{RB}^{GUARD"} in step S304 and determines whether "n(k)>Nₘᵢₙ" is established in step S305.

Here, the "n(k)" denotes an amount of resources used in the resource block #k, the "N_{F}" denotes a number of frequency direction resources (resource blocks) which can be multiplexed in the time direction in one time direction resource (sub-frame), and the "N _{RB}^{GUARD"} denotes a number of outer band resource blocks which can be multiplexed in the frequency direction.

When it is determined that the "n(k)>Nₘᵢₙ" is established, the radio base station eNB increments "k" by one in step S306 and returns to the operation of step S305.

Meanwhile, when it is determined that the "n(k)>Nₘᵢₙ" is not established, the radio base station eNB assigns the resource block #k as the CQI transmission resource and increments "n(k)" by one in step S311.

In step S307, the radio base station eNB evaluates a minimum value Nₘᵢₙ of code direction resources (CSs) in use in the outer band resource block.

The radio base station eNB sets "k=0" in step S308 and determines whether "n(k)>Nₘᵢₙ" is established in step S309.

When it is determined that the "n(k)>Nₘᵢₙ" is established, the radio base station eNB increments "k" by one in step S310 and returns to the operation of step S309.

Meanwhile, when it is determined that the "n(k)>Nₘᵢₙ" is not established, the radio base station eNB assigns the resource block #k as the CQI transmission resource and increments "n(k)" by one in step S311.

In step S312, the radio base station eNB updates "m_{CS}(k)" by "m_{CS}(k)=(m_{CS}(k)+1) mod N_{CS}".

Here, the "mcs(k)" denotes an index within the resource block of the code direction resource (CSs) assigned in the previous time in the resource block #k, and the "Ncs" denotes a maximum number of available CSs in one resource block.

In step S313, the radio base station eNB determines whether code direction resource (CSs) with the index "m_{CS}(k)" within the resource blocks is vacant.

When it is determined that the code direction resource (CSs) is not vacant, the radio base station eNB repeats the operation of step S312. When it is determined that the code direction resource (CSs) is vacant, the radio base station eNB assigns the code direction resource (CSs) as the CQI transmission resource in step S314.

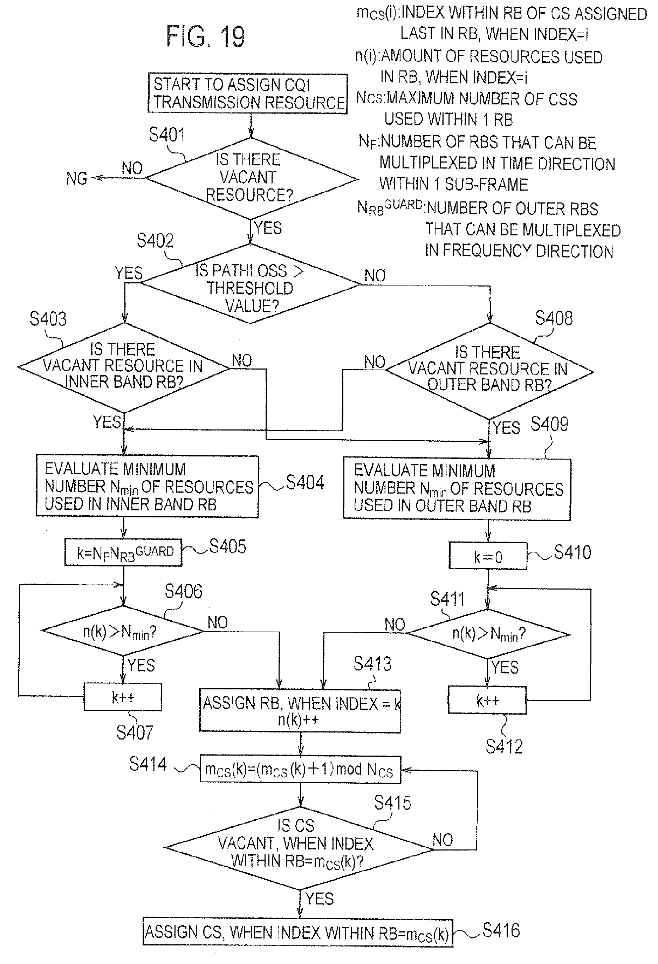

Fourthly, with reference to Fig. 19, a fourth example of the assignment operation will be explained. As illustrated in Fig. 19, in step S401, the radio base station eNB determines whether a vacant resource assignable as the CQI transmission resource exists within the PUCCH resource.

When it is determined that the vacant resource exists, the radio base station eNB proceeds to the process of step S402. When it is determined that the vacant resource does not exist, the radio base station eNB fails in the assignment of the CQI transmission resource.

In step S402, the radio base station eNB determines whether the propagation loss in an uplink is larger than a threshold value.

When it is determined that the propagation loss in the uplink is larger than the threshold value, the radio base station eNB proceeds the present operation to the process of step S403. In other cases, the present operation proceeds to the process of step S408.

In step S403, the radio base station eNB determines whether the available code direction resource (CSs) exists in the inner band resource block.

When it is determined that the available code direction resource (CSs) exists in the inner band resource block, the radio base station eNB proceeds to the process of step S404. When it is determined that the available code direction resource (CSs) does not exist, the radio base station eNB proceeds to the process of step S409.

Meanwhile, in step S408, the radio base station eNB determines whether the available code direction resource (CSs) exists within the outer band resource block.

When it is determined that the available code direction resource (CSs) exists within the outer band resource block, the radio base station eNB proceeds to the process of step S409. When it is determined that the available code direction resource (CSs) does not exist, the radio base station eNB proceeds to the process of step S404.

Hereinafter, since the processes of steps S404 to S407 are the same as the processes of steps S303 to S306 illustrated in Fig. 18, the processes of steps S409 to S412 are the same as the processes of steps S307 to S310 illustrated in Fig. 18, and the processes of steps S413 to S416 are the same as the processes of steps S311 to S314 illustrated in Fig. 18, the description thereof will be omitted.

### (Operation and Effect of the mobile communication system according to the first embodiment of the present invention)

In accordance with the mobile communication system according to the first embodiment of the present invention, since the resource assignment unit 11 of the radio base station eNB is configured to determine a time direction resource (sub-frame) and a frequency direction resource (resource block) to be assigned as a CQI transmission resource and then finally determine a code direction resource (CSs) to be assigned as the CQI transmission resource, thereby reducing the assignment of the CQI transmission resource in the same frequency direction resource (resource block) and suppressing an increase of interference as much as possible.

Further, in accordance with the mobile communication system according to the first embodiment of the present invention, since an inner band resource block is preferentially used, it is possible to improve the characteristic deterioration due to a signal distortion in end side bands of a transmission filter of the mobile station UE.

It is noted that in accordance with the mobile communication system according to the first embodiment of the present invention, since the preferential use of the inner band resource block and the preferential use of the outer band resource block can be switched according to a propagation loss in an uplink, the assignment of the CQI transmission resource is prevented from being concentrated in a specific frequency direction resource (resource block), so that it is possible to suppress an increase of interference as much as possible, and it is possible to improve the characteristic deterioration due to a signal distortion in both side bands of the transmission filter of the mobile station UE.

The above-mentioned characteristics of the embodiment may be expressed as follows:

A first characteristic of this embodiment is a radio base station eNB that includes a resource assignment unit 11 configured to determine a time direction resource (sub-frame), a frequency direction resource (resource block), and a code direction resource (CSs) which are to be assigned to each mobile station UE as a CQI transmission resource (reception quality notification resource) that should be used for transmitting a CQI, wherein the resource assignment unit 11 is configured to determine the time direction resource (sub-frame) and the frequency direction resource (resource block), which are to be assigned as the CQI transmission resource, and then determine the code direction resource (CSs) to be assigned as the CQI transmission resource.

In the first characteristic of this embodiment, the resource assignment unit 11 may be configured to determine the frequency direction resource (resource block) to be assigned as the CQI transmission resource based on the usage situation of the code direction resource (CSs) in each frequency direction resource (resource block).

In the first characteristic of this embodiment, the resource assignment unit 11 may be configured to assign, as the CQI transmission resource, in order from a frequency direction resource (resource block) with a small number of code direction resources (CSs) in use within each time direction resource (sub-frame).

In the first characteristic of this embodiment, the resource assignment unit 11 may be configured to assign, as the CQI transmission resource, in order from a frequency direction resource (resource block) with a larger number of available code direction resources (CSs) within each time direction resource (sub-frame).

In the first characteristic of this embodiment, the resource assignment unit 11 may be configured to assign, as the CQI transmission resource, in order from a frequency direction resource (resource block) with a lower usage rate of code direction resources (CSs) within each time direction resource (sub-frame).

In the first characteristic of this embodiment, the resource assignment unit 11 may be configured to use, as the available code direction resources (CSs), a code direction resource (CSs) having elapsed a constant period of time after being released in each frequency direction resource (resource block).

In the first characteristic of this embodiment, the resource assignment unit 11 may be configured to assign, as the CQI transmission resource, in order from a frequency direction resource (resource block) belonging to an inner frequency band within the system bandwidth.

In the first characteristic of this embodiment, the resource assignment unit 11 may be configured to classify the resource blocks into an inner band frequency direction resource (inner band resource block) belonging to an inner frequency band in the system bandwidth and an outer band frequency direction resource (outer band resource blocks) belonging to an outer frequency band in the system bandwidth, and assign, as the CQI transmission resource, one of the inner band frequency direction resource (inner band resource block) and the outer band frequency direction resource (outer band resource block) based on the propagation loss in the uplink.

In the first characteristic of this embodiment, the resource assignment unit 11 may be configured to intermittently assign the code direction resource (CSs) in each frequency direction resource (resource block).

In the first characteristic of this embodiment, the resource assignment unit 11 may be configured to deviate an assignment position of the code direction resource (CSs) to which a specific index is imparted from an assignment position of the code direction resource (CSs) to which the specific index is imparted in another cell.

A second characteristic of this embodiment is a mobile communication method that includes: a step A of determining a time direction resource (sub-frame), a frequency direction resource (resource block), and a code direction resource (CSs) which are to be assigned to each mobile station UE as a CQI transmission resource that should be used for transmitting a CQI; and a step B of notifying each mobile station UE of the time direction resource (sub-frame), the frequency direction resource (resource block), and the code direction resource (CSs), which have been assigned as the CQI transmission resource, in which in the step A, the time direction resource (sub-frames) and the frequency direction resource (resource block) to be assigned as the CQI transmission resource are determined, and then the code direction resource (CSs) to be assigned as the CQI transmission resource is determined.

Note that operation of the above described the radio base station eNB and the mobile station UE may be implemented by means of hardware, a software module executed by a processor, or a combination of both.

The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Also, the storage medium may be integrated into the processor. Also, the storage medium and the processor may be provided in an ASIC The ASIC may be provided in the radio base station eNB or the mobile station UE. Also, the storage medium and the processor may be provided in the radio base station eNB or the mobile station UE as a discrete component.

Hereinabove, the present invention has been described in detail using the above embodiment; however, it is apparent to those skilled in the art that the present invention is not limited to the embodiment described herein. Modifications and variations of the present invention can be made without departing from the spirit and scope of the present invention defined by the description of the scope of claims. Thus, what is described herein is for illustrative purpose, and has no intention whatsoever to limit the present invention.

## Claims

1. A radio base station comprising: a resource assignment unit configured to determine a time direction resource, a frequency direction resource, and a code direction resource which are to be assigned as a reception quality notification resource that should be used for notifying each mobile station of a reception quality in a downlink, wherein
the resource assignment unit is configured to determine the time direction resources and the frequency direction resources, which are to be assigned as the reception quality notification resource, and then determine the code direction resources to be assigned as the reception quality notification resource.

2. The radio base station according to claim 1, wherein the resource assignment unit is configured to determine the frequency direction resource to be assigned as the reception quality notification resource based on a usage situation of the code direction resource in each frequency direction resource.

3. The radio base station according to claim 2, wherein the resource assignment unit is configured to assign, as the reception quality notification resource, in order from a frequency direction resource with a smaller number of code direction resources in use, within each time direction resource.

4. The radio base station according to claim 2, wherein the resource assignment unit is configured to assign, as the reception quality notification resource, in order from a frequency direction resource with a larger number of available code direction resources, within each time direction resource.

5. The radio base station according to claim 2, wherein the resource assignment unit is configured to assign, as the reception quality notification resource, in order from a frequency direction resource with a lower usage rate of the code direction resource, within each time direction resource.

6. The radio base station according to claim 3, wherein the resource assignment unit is configured to use, as the available code direction resource, a code direction resource that has elapsed a constant period of time after being released, within each frequency direction resource.

7. The radio base station according to claim 1, wherein the resource assignment unit is configured to assign, as the reception quality notification resource, in order from a frequency direction resource belonging to an inner frequency band within a system bandwidth.

8. The radio base station according to claim 1, wherein
the resource assignment unit is configured to classify a frequency direction resource into an inner band frequency direction resource belonging to an inner frequency band within a system bandwidth and an outer band frequency direction resource belonging to an outer frequency band within the system bandwidth, and assign, as a reception quality notification resource, one of the inner band frequency direction resource and the outer band frequency direction resource, based on a propagation loss in an uplink.

9. The radio base station according to claim 1, wherein the resource assignment unit is configured to intermittently assign the code direction resource in each frequency direction resource.

10. The radio base station according to claim 1, wherein the resource assignment unit is configured to deviate an assignment position of a code direction resource to which a specific index is imparted from an assignment position of a code direction resource to which the specific index is imparted in another cell.

11. A mobile communication method, comprising:
a step A of determining a time direction resource, a frequency direction resource, and a code direction resource which are to be assigned as a reception quality notification resource that should be used for notifying each mobile station of a reception quality in a downlink; and
a step B of notifying each mobile station of the time direction resource, the frequency direction resource, and the code direction resource which are assigned as the reception quality notification resource, wherein
in the step A, the time direction resource and the frequency direction resource to be assigned as the reception quality notification resource are determined, and then the code direction resource to be assigned as the reception quality notification resource is determined.
